# EUROPEAN PATENT APPLICATION

(11) **EP 3 499 683 A1**
(43) Date of publication of application: **19.06.2019**
(21) Application number: 17839136.3
(22) Date of filing: 13.07.2017
(51) Int. Cl.: H02J 50/90, H02J 50/12, H02J 50/40, H02J 50/80, H05B 6/12

(54) **POWER SUPPLYING DEVICE, POWER RECEIVING DEVICE, AND POWER TRANSMISSION SYSTEM EQUIPPED WITH SAME**

(30) Priority: 09.08.2016 JP 2016156197
(71) Applicant: Panasonic Intellectual Property Management Co., Ltd., Osaka-shi, Osaka 540-6207 (JP)
(72) Inventor: FURUSAWA Satoshi, Osaka 540-6207 (JP); YOSHIKAWA Yoshishige, Osaka 540-6207 (JP); KUROBE Akio, Osaka 540-6207 (JP)
(74) Representative: SSM Sandmair
(86) International application number: PCT/JP2017/025512
(87) International publication number: WO 2018/030062

(57) **Abstract**

A power supplying device (1) includes a plurality of power supply units (3), a communication unit (4) which communicates with a power receiving device (10), and a controller (2) which controls the power supply units (3) and the communication unit (4). The power supplying device (1) further includes loop antennas (7a, 7b, 7c) disposed so as to respectively correspond to the power supply units (3), and each covering the surrounding region of a corresponding one of the power supply units (3). The communication unit (4) transmits a signal via one loop antenna (7a) of the loop antennas (7a, 7b, 7c). When the communication unit (4) receives a signal confirming that the power receiving device (10) has received the signal transmitted via the one loop antenna (7a), the controller (2) determines that the power receiving device (10) is placed opposing one power supply unit (3a) of the power supply units (3) which corresponds to the one loop antenna (7a). According to this aspect, the power supply coil opposing the power receiving coil can be identified within a practical wait time.

## Description

### TECHNICAL FIELD

The present disclosure relates to a power transmission system which includes a power supplying device which transmits power and a power receiving device which receives the power transmitted from the power supplying device.

### BACKGROUND ART

Conventionally, a configuration is known in which wireless communication is performed between a power supplying device and a power receiving device in order to enhance the usability and reliability of a contactless power transmission system (for example, see Patent Literature (PTL) 1).

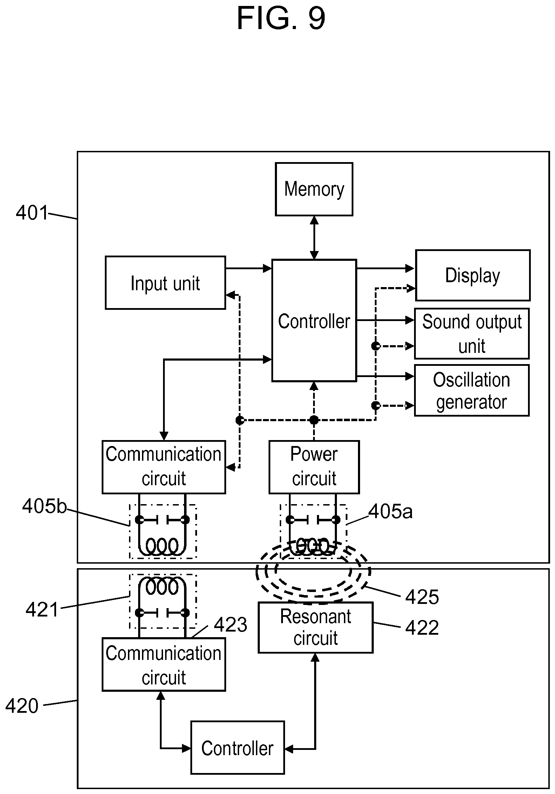

FIG. 9 is a configuration block diagram of the conventional contactless power transmission system disclosed in PTL 1. As illustrated in FIG. 9, in the conventional technique, device body 420 corresponds to a contactless power supplying device, and remote control device 401 corresponds to a contactless power receiving device.

Remote control device 401 includes power-receiving resonant circuit 405a and communication resonant circuit 405b. Resonant circuit 405a is used for wirelessly receiving power transmitted from device body 420 based on a change in magnetic flux generated by device body 420, to input an instruction to device body 420 and output information related to device body 420. Resonant circuit 405b is used for wirelessly performing bidirectional communication of communication signals with device body 420.

Device body 420 includes power-receiving resonant circuit 422 corresponding to resonant circuit 405a, communication resonant circuit 421 corresponding to resonant circuit 405b, and communication circuit 423.

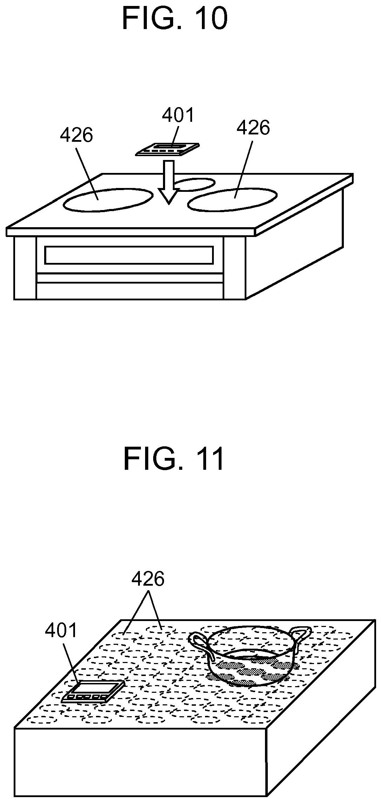

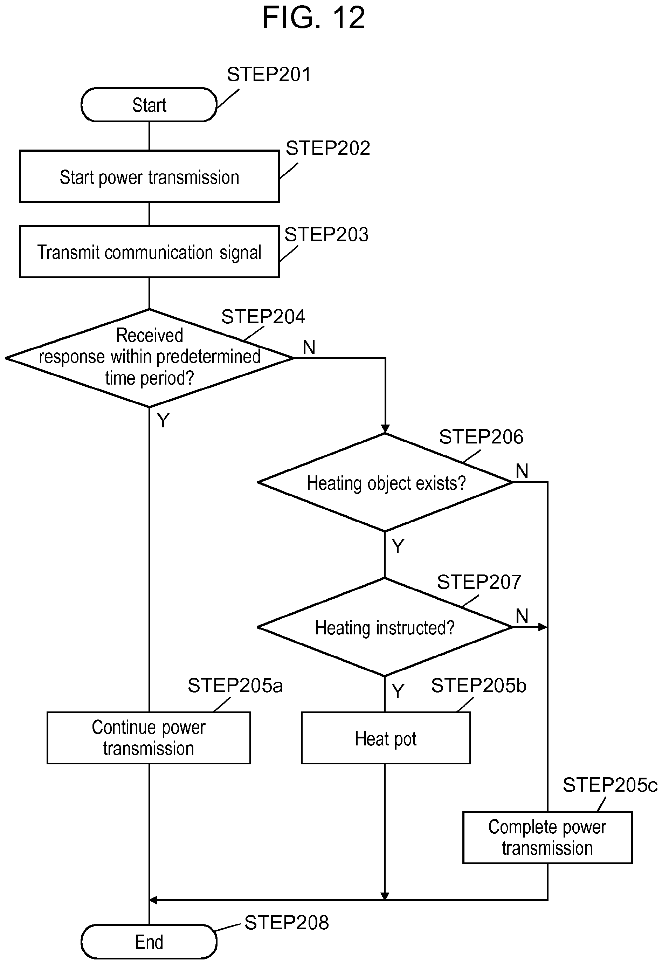

FIG. 10 and FIG. 11 are perspective views illustrating specific examples of the contactless power transmission system according to the conventional technique. FIG. 10 illustrates an example of an induction heating device in which two heating coils 426 are arranged. FIG. 11 illustrates an example of an induction heating device in which a large number of relatively small heating coils 426 are arranged so as to be distributed in a planar state. FIG. 12 is a flowchart of control performed by device body 420 to detect remote control device 401.

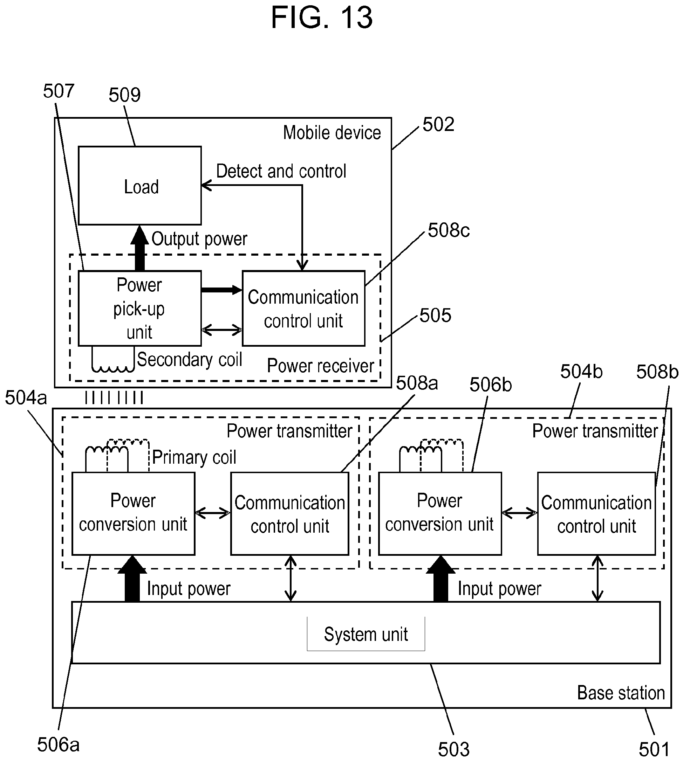

FIG. 13 is a configuration block diagram of a conventional contactless power transmission system disclosed in non-patent literature (NPTL) 1. NPTL 1 defines the specifications of a contactless power transmission system mainly for a mobile device such as a smart phone.

As illustrated in FIG. 13, the contactless power transmission system defined in NPTL 1 includes base station 501 and mobile device 502.

Contactless power transmission is performed from power conversion unit 506a and power conversion unit 506b of base station 501 to power pick-up unit 507 of mobile device 502. Load 509 of mobile device 502 consumes the transmitted power.

During this period, base station 501 controls the magnitude of power to be transmitted, according to the magnitude of the required power transmitted from power receiver 505 of mobile device 502 to power transmitter 504a and power transmitter 504b of base station 501 via communication control unit 508a and communication control unit 508b.

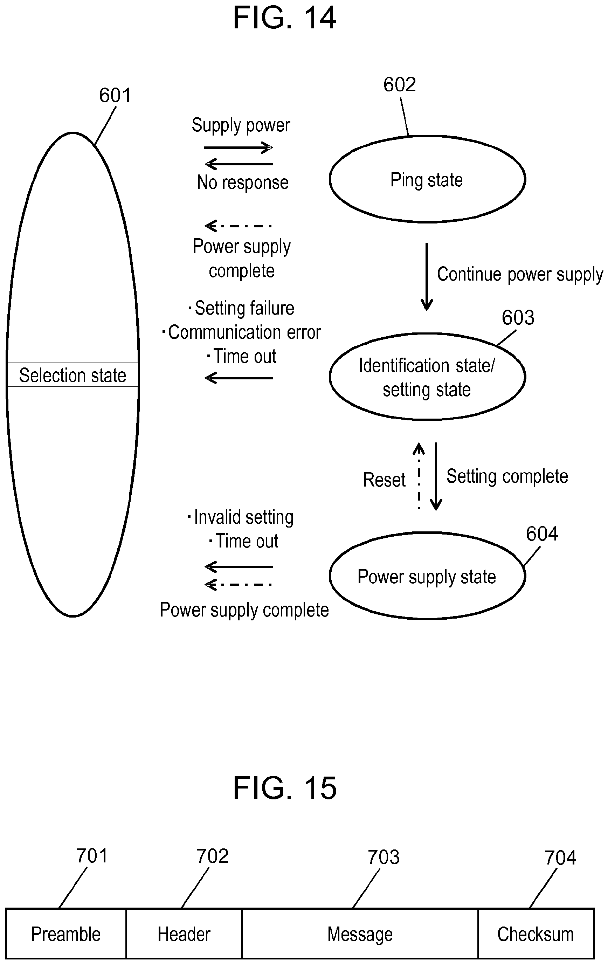

FIG. 14 is a state transition diagram of the conventional contactless power transmission system disclosed in NPTL 1. In selection state 601 illustrated in FIG. 14, the contactless power transmission system detects whether or not mobile device 502 is placed on base station 501.

For example, base station 501 detects the placement of mobile device 502 on base station 501, by detecting a change in impedance. Upon detection of the placement of mobile device 502, base station 501 transitions to ping state 602.

In ping state 602, base station 501 transmits micro power for operating communication control unit 508c from power conversion unit 506a to power pick-up unit 507 of mobile device 502.

In this situation, if a response from mobile device 502 is not transmitted to base station 501 via communication control units 508a and 508b within a predetermined time period, base station 501 returns to selection state 601. If the response is transmitted, base station 501 continues the transmission of micro power, and transitions to identification state/setting state 603.

In identification state/setting state 603, mobile device 502 transmits identification information and the magnitude of the required power to base station 501 via communication control units 508a and 508b. When base station 501 determines that the magnitude of the power required by mobile device 502 can be met, base station 501 completes the setting and transitions to power supply state 604.

In power supply state 604, power is transmitted from power transmitter 504a of base station 501 to power receiver 505 of mobile device 502. The magnitude of the power to be transmitted is controlled according to the magnitude of the required power transmitted from power receiver 505 of mobile device 502 to power transmitter 504a of base station 501. The transmitted power is consumed by load 509 of mobile device 502.

FIG. 15 illustrates a format of a communication packet used in the contactless power transmission system disclosed in NPTL 1.

As illustrated in FIG. 15, the format of the communication packet includes preamble 701, header 702, message 703, and checksum 704.

Preamble 701 is data of 11 to 25 bytes for detecting a communication packet. Header 702 is 1-byte data to which a code corresponding to the message type and the message size is allocated. Message 703 is data of 1 to 27 bytes corresponding to the code of header 702. Checksum 704 is 1-byte data for detecting a packet error.

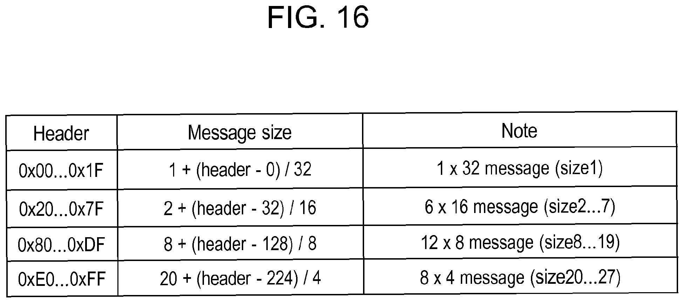

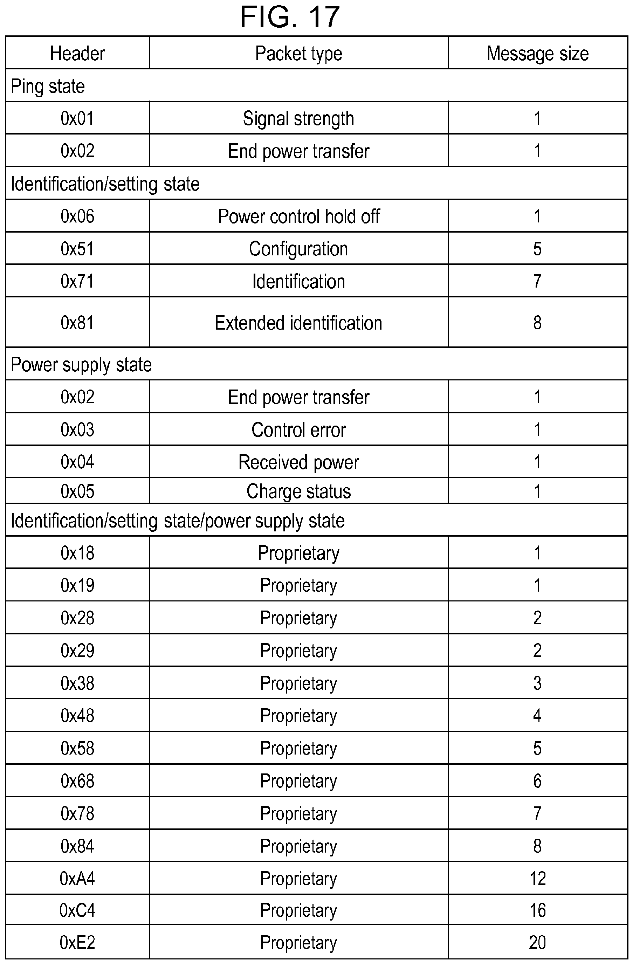

FIG. 16 is a diagram illustrating a relationship between message size and header code defined in NPTL 1. FIG. 17 is a diagram illustrating the message types defined in NPTL 1.

NPTL 1 defines the use of the message size of 1 to 27 bytes obtained by substituting the code in header 702 to the formula illustrated in FIG. 16. As illustrated in FIG. 17, NPTL 1 also defines the message packet type and message size for each code. Here, a detailed description thereof will be omitted.

### Citation List

### Patent Literature

PTL 1: Japanese Unexamined Patent Application Publication No. 2009-165291

### Non-Patent Literature

NPTL 1: System Description Wireless Power Transfer Volume I:Low Power Part 1:Interface Definition Version 1.1.2 June 2013

### SUMMARY

As in the conventional contactless power transmission system disclosed in PTL 1, when the power supplying device includes a plurality of power-supplying resonant circuits, communication resonant circuits and communication circuits are required in the same number as the number of power supply coils. This complicates the configuration, which may increase the manufacturing cost.

In a power supplying device which includes one communication unit and a plurality of power supply coils and in which the communication unit is used for each of the power supply coils in a time-division manner, it is necessary to identify the power supply coil opposing the power receiving coil of the power receiving device. In this case, depending on the number of the power supply coils, more time is required for identifying the power supply coil of the power supplying device.

A power supplying device according to one aspect of the present disclosure includes, for transmitting power to a power receiving device, a plurality of power supply units, a power-supply-side communication unit which communicates with the power receiving device, and a power-supply-side controller which controls the plurality of power supply units and the power-supply-side communication unit.

The power supplying device according to the aspect further includes a plurality of power supply antennas disposed so as to respectively correspond to the plurality of power supply units. Each of the plurality of power supply antennas covers the surrounding region of a corresponding one of the plurality of power supply units.

The power-supply-side communication unit transmits a signal via one of the plurality of power supply antennas. When the power supply-side communication unit receives a signal confirming that the power receiving device has received the signal transmitted via the one of the plurality of power supply antennas, the power supply-side controller determines that the power receiving device is placed opposing one of the plurality of power supply units which corresponds to the one of the plurality of power supply antennas.

The present disclosure provides a power transmission system in a practical size which includes a plurality of power supply coils and which is capable of identifying the power supply coil of the power supplying device opposing the power receiving coil of the power receiving device.

### BRIEF DESCRIPTION OF THE DRAWINGS

FIG. 1 is a block diagram of a contactless power transmission system according to an embodiment of the present disclosure.
FIG. 2A illustrates a configuration of a loop antenna in the contactless power transmission system according to the embodiment.
FIG. 2B illustrates another configuration of the loop antenna in the contactless power transmission system according to the embodiment.
FIG. 3 illustrates a format of a communication packet in the contactless power transmission system according to the embodiment.
FIG. 4 is a state transition diagram of the contactless power transmission system according to the embodiment.
FIG. 5 is a block diagram of the contactless power transmission system according to the embodiment which indicates a state where a contactless power receiving device has been moved.
FIG. 6 is a graph which indicates a relationship between the horizontal distance from the center of a power receiving coil to the center of a power supply coil and the power received by the contactless power receiving device.
FIG. 7 is a plan view schematically illustrating an induction heating cooker which functions as the contactless power transmission system according to the embodiment.
FIG. 8 is a plan view schematically illustrating a state where a plurality of contactless power receiving devices are placed on the induction heating cooker according to the embodiment.
FIG. 9 is a configuration block diagram of a contactless power transmission system according to a conventional technique.
FIG. 10 is a perspective view illustrating a specific example of the contactless power transmission system according to the conventional technique.
FIG. 11 is a perspective view illustrating a specific example of the contactless power transmission system according to the conventional technique.
FIG. 12 is a flowchart of control performed in the contactless power transmission system according to the conventional technique.
FIG. 13 is a configuration block diagram of a contactless power transmission system according to a conventional technique.
FIG. 14 is a state transition diagram of the contactless power transmission system according to the conventional technique.
FIG. 15 illustrates a communication frame format in the contactless power transmission system according to the conventional technique.
FIG. 16 illustrates a relationship between the header and message size of the communication frame form in the contactless power transmission system according to the conventional technique.
FIG. 17 illustrates a relationship between the header, packet type, and message size of the communication frame form in the contactless power transmission system according to the conventional technique.

### DESCRIPTION OF EMBODIMENT

A power supplying device according to a first aspect of the present disclosure includes, for transmitting power to a power receiving device, a plurality of power supply units, a power-supply-side communication unit which communicates with the power receiving device, and a power-supply-side controller which controls the plurality of power supply units and the power-supply-side communication unit.

The power supplying device according to the aspect further includes a plurality of power supply antennas disposed so as to respectively correspond to the plurality of power supply units. Each of the plurality of power supply antennas covers the surrounding region of a corresponding one of the plurality of power supply units.

The power-supply-side communication unit transmits a signal via one of the plurality of power supply antennas. When the power-supply-side communication unit receives a signal confirming that the power receiving device has received the signal transmitted via the one of the plurality of power supply antennas, the power-supply-side controller determines that the power receiving device is placed opposing one of the plurality of power supply units which corresponds to the one of the plurality of power supply antennas.

The power supplying device according to a second aspect of the present disclosure includes, in addition to the first aspect, an antenna selection switch which connects the power-supply-side communication unit to at least one of the plurality of power supply antennas in a switchable manner. The power-supply-side controller controls the antenna selection switch such that the power-supply-side communication unit is sequentially connected to each of the plurality of power supply antennas in a time-division manner.

According to the power supplying device of a third aspect of the present disclosure, in the first aspect, the power supply-side communication unit transmits identification information specific to the plurality of power supply units via the plurality of power supply antennas, respectively, and receives a signal transmitted from the power receiving device.

When the signal transmitted from the power receiving device includes identification information specific to one of the plurality of power supply units, the power supply-side controller determines that the power receiving device is placed opposing to the one of the plurality of power supply units.

According to the power supplying device of a fourth aspect of the present disclosure, in the third aspect, when a change in identification information is detected during the power transmission performed by one of the plurality of power supply units, the power-supply-side controller causes the one of the plurality of power supply units to stop the power transmission.

According to the power supplying device of a fifth aspect of the present disclosure, in the first aspect, the power-supply-side communication unit receives a signal including identification information specific to the power receiving device. When the power-supply-side controller determines, based on the identification information, during the power transmission performed by the one of the plurality of power supply units, that the power receiving device is placed opposing another one of the plurality of power supply units different from the one of the plurality of power supply units, the power-supply-side controller causes the one of the plurality of power supply units to stop the power transmission and causes the another one of the plurality of power supply units to perform power transmission.

According to the power supplying device of a sixth aspect of the present disclosure, in the fifth aspect, the power-supply-side controller causes the another one of the plurality of power supply units to perform power transmission using a parameter for the power transmission performed by the one of the plurality of power supply units.

According to the power supplying device of a seventh aspect of the present disclosure, in the first aspect, each of the plurality of power supply antennas is disposed by using a twisted pair wire.

A power receiving device according to an eighth aspect of the present disclosure receives power transmitted from a power supplying device which includes a plurality of power supply units and a plurality of power supply antennas disposed so as to respectively correspond to the plurality of power supply units and each covering the surrounding region of a corresponding one of the plurality of power supply units.

The power receiving device according to the aspect includes a power receiving unit, a power-receiving-side antenna, and a power-receiving-side communication unit. The power-receiving-side communication unit is connected to the power-receiving-side antenna. When the power-receiving-side communication unit receives a signal transmitted via one of the plurality of power supply antennas, the power-receiving-side communication unit transmits a signal confirming the receipt of the signal transmitted via the one of the plurality of power supply antennas.

According to the power receiving device of a ninth aspect of the present disclosure, in the eight aspect, the power-receiving-side communication unit transmits a signal including identification information which is included in the signal transmitted from the power supplying device and which is specific to one of the plurality of power supply units.

According to the power receiving device of a tenth aspect of the present disclosure, in the eighth aspect, the power-receiving-side communication unit transmits a signal including identification information specific to the power receiving device.

A power transmission system according to an eleventh aspect of the present disclosure includes a power supplying device which transmits power to a power receiving device, and the power receiving device which receives the power transmitted from the power supplying device.

The power supplying device includes a plurality of power supply units, a power-supply-side communication unit which communicates with the power receiving device, and a power-supply-side controller which controls the plurality of power supply units and the power-receiving-side communication unit. The power receiving device includes a power receiving unit, a power-receiving-side antenna, and a power-receiving-side communication unit.

The power supplying device further includes a plurality of power supply antennas disposed so as to respectively correspond to the plurality of power supply units. Each of the plurality of power supply antennas covers the surrounding region of a corresponding one of the plurality of power supply units.

The power-supply-side communication unit transmits a signal via one of the plurality of power supply antennas.

The power-receiving-side communication unit is connected to the power-receiving-side antenna. When the power-receiving-side communication unit receives the signal transmitted via the one of the plurality of power supply antennas, the power-receiving-side communication unit transmits a signal confirming the receipt of the signal transmitted via the one of the plurality of power supply antennas.

When the power-supply-side communication unit receives the signal confirming that the power receiving device has received the signal transmitted via the one of the plurality of power supply antennas, the power-supply-side controller determines that the power receiving device is placed opposing to one of the plurality of power supply units which corresponds to the one of the plurality of power supply antennas.

Hereinafter, an embodiment of the present disclosure will be described with reference to the drawings.

### [Configuration of Contactless Power Transmission System]

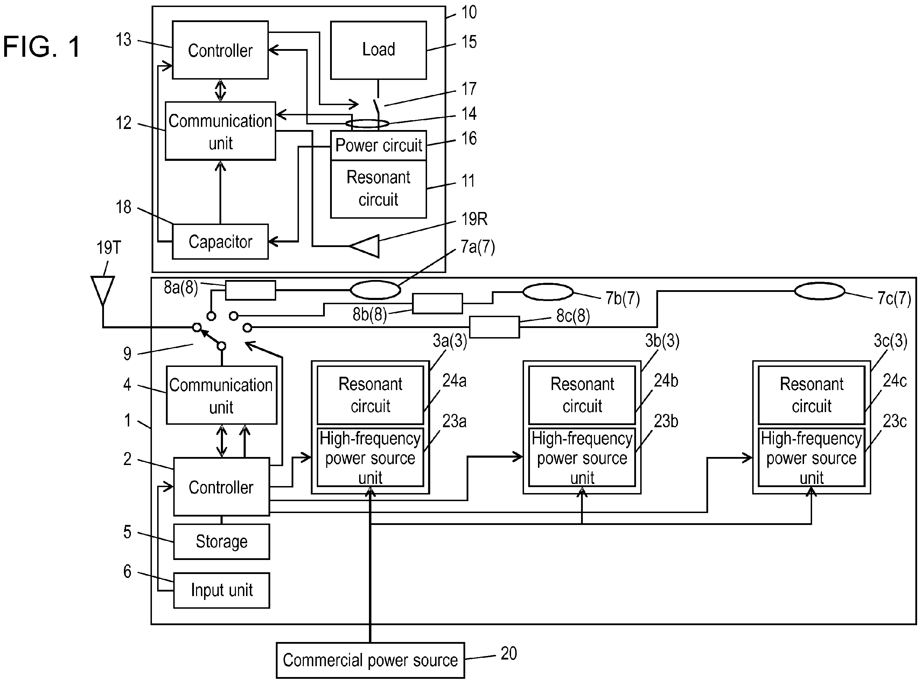

FIG. 1 is a configuration block diagram of a contactless power transmission system according to Embodiment 1 of the present disclosure. As illustrated in FIG. 1, the contactless power transmission system according to the present embodiment includes contactless power supplying device 1, and at least one contactless power receiving device 10 placed on contactless power supplying device 1.

Contactless power supplying device 1 includes controller 2, power supply unit 3, communication unit 4, storage 5, and input unit 6. Communication unit 4 is a power-supply-side communication unit and communicates with communication unit 12 of contactless power receiving device 10 to be described later. Specific examples of contactless power supplying device 1 include an induction heating cooker embedded in a kitchen countertop.

Power supply unit 3 is a generic term for power supply unit 3a, power supply unit 3b, and power supply unit 3c. Power supply unit 3a includes high-frequency power source unit 23a and resonant circuit 24a. Power supply unit 3b includes high-frequency power source unit 23b and resonant circuit 24b. Power supply unit 3c includes high-frequency power source unit 23c and resonant circuit 24c.

High-frequency power source units 23a to 23c each convert the power, which is an alternating-current (AC) voltage, such as 100 V or 200 V, supplied from commercial power source 20, into a high-frequency power.

Each of resonant circuits 24a to 24c includes a power supply coil. Resonant circuits 24a to 24c respectively transmits the power converted by high-frequency power source units 23a to 23c to resonant circuit 11 of contactless power receiving device 10 to be described later, in a contactless manner.

Storage 5 stores information supplied from controller 2, and supplies the stored information to controller 2 as needed. The information stored in storage 5 includes parameters for power transmission by power supply unit 3 (hereinafter, referred to as power supply parameters).

Storage 5 is made of a non-volatile memory so that various data can be stored even without power supply. Storage 5 may be packaged together with controller 2, or may be provided separately from controller 2.

Input unit 6 is made of a touch panel device having a planar display, receives an instruction from a user, and transmits the instruction to controller 2.

Controller 2 is a power-supply-side controller made of, for example, a microprocessor. Controller 2 controls communication unit 4, storage 5, input unit 6, and high-frequency power source units 23a to 23c.

Contactless power supplying device 1 further includes loop antenna 7, attenuator 8, multi-contact switch 9, and sensitive antenna 19T. Attenuator 8 is a generic term for attenuators 8a, 8b, and 8c. Loop antenna 7 is a generic term for loop antennas 7a, 7b, and 7c.

Loop antenna 7a is disposed near the center of the power supply coil included in power supply unit 3a. Loop antenna 7b is disposed near the center of the power supply coil included in power supply unit 3b. Loop antenna 7c is disposed near the center of the power supply coil included in power supply unit 3c.

Loop antennas 7a to 7c each have a sensitivity less than the sensitivities of power-supply-side sensitive antenna 19T and power-receiving-side sensitive antenna 19R to be described later. Loop antennas 7a to 7c correspond to power supply antennas.

As the power supply antenna, a directional antennas, such as a patch antennas, is applicable instead of an inexpensive flexible loop antenna.

Attenuators 8a to 8c each attenuate the signal from communication unit 4. Therefore, the signal transmitted from loop antenna 7a is unlikely to reach the outside of the surrounding region of power supply unit 3a. The signal transmitted from loop antenna 7b is unlikely to reach the outside of the surrounding region of power supply unit 3b. The signal transmitted from loop antenna 7c is unlikely to reach the outside of the surrounding region of power supply unit 3c.

In order to connect with communication unit 4, multi-contact switch 9 selects one of sensitive antenna 19T, loop antenna 7a via attenuator 8a, loop antenna 7b via attenuator 8b, and loop antenna 7c via attenuator 8c. Multi-contact switch 9 corresponds to an antenna selection switch. Controller 2 controls multi-contact switch 9.

Contactless power receiving device 10 includes resonant circuit 11, communication unit 12, controller 13, power meter 14, load 15, power circuit 16, switch 17, capacitor 18, and sensitive antenna 19R.

Specific examples of contactless power receiving device 10 include a juicer, a blender and an electric water boiler and warmer. Specific examples of load 15 include the motor included in a juicer, a mixer or the like, and the heater included in an electric water boiler and warmer.

Resonant circuit 11 includes a power receiving coil, and is a power receiving unit of contactless power receiving device 10, which receives power transmitted in a contactless manner from power supply unit 3 of contactless power supplying device 1. Power circuit 16 converts the power received by resonant circuit 11 into power for operating load 15. Power meter 14 measures the power supplied from power circuit 16.

Sensitive antenna 19R is disposed near the center of the power receiving coil. Communication unit 12 is a power-receiving-side communication unit which communicates with contactless power supplying device 1 via sensitive antenna 19R. Sensitive antenna 19R corresponds to a power-receiving-side antenna.

Controller 13 is a power-receiving-side controller made of, for example, a microprocessor. Controller 13 operates switch 17 such that power from power circuit 16 is supplied to load 15.

Controller 13 calculates the difference (hereinafter, referred to as power error) between the magnitude of power being received which is measured by power meter 14 and the rated power of load 15. Controller 13 causes communication unit 12 to transmit a power control message including the power error via sensitive antenna 19R.

Capacitor 18 is connected to power circuit 16, and charges the power converted by power circuit 16. The power charged in capacitor 18 is supplied to communication unit 12 and controller 13.

In contactless power supplying device 1, communication unit 4 repeatedly transmits a message request via sensitive antenna 19T, and receives the power control message from communication unit 12. Controller 2 controls high-frequency power source units 23a to 23c based on the power error included in the power control message, such that power required for operating load 15 is supplied.

Use of sensitive antennas 19T and 19R allows contactless power receiving device 10 to communicate with contactless power supplying device 1 regardless of the position where contactless power receiving device 10 is placed as long as it is within a predetermined region on contactless power supplying device 1.

When contactless power supplying device 1 is capable of communicating with contactless power receiving device 10 placed at a given position in the predetermined region on contactless power supplying device 1, sensitive antennas 19T and 19R do not have to have the same function nor same sensitivity. Communication units 4 and 12 also have a function such as modulation and demodulation of a signal.

According to the present embodiment, controller 2 controls multi-contact switch 9 such that communication unit 4 is connected to sensitive antenna 19T. When communication unit 4 receives the signal transmitted by communication unit 12 via sensitive antenna 19T, controller 2 starts detection of power supply unit 3 which is closest to contactless power receiving device 10.

Controller 2 controls multi-contact switch 9 such that communication unit 4 is sequentially connected to each of loop antennas 7a to 7c in a time-division manner.

Communication unit 4 receives, via sensitive antenna 19T, a signal confirming that, for example, contactless power receiving device 10 has received the signal transmitted via loop antenna 7a. In this case, controller 2 determines that contactless power receiving device 10 is placed above power supply unit 3a such that resonant circuit 11 opposes power supply unit 3a.

According to the present embodiment, multi-contact switch 9 connects, in a switchable manner, communication unit 4 to one of sensitive antenna 19T which covers the entire predetermined region on contactless power supplying device 1 and loop antennas 7a to 7c each covering only the surrounding region of a corresponding one of power supply units 3a to 3c.

In contactless power supplying device 1, communication unit 4 transmits identification information specific to power supply units 3a to 3c (for example, 0ah, 0bh, 0ch) via loop antennas 7a to 7c, respectively, in a time-division manner.

In contactless power receiving device 10, when communication unit 12 receives the identification information specific to any one of power supply units 3a to 3c via sensitive antenna 19R, communication unit 12 transmits a message including the identification information via sensitive antenna 19R in order to confirm the receipt of the identification information.

In contactless power supplying device 1, when communication unit 4 receives the message via sensitive antenna 19T, controller 2 is capable of identifying the position of contactless power receiving device 10. This will be described in detail later.

As described above, in the present embodiment, microprocessors configure controllers 2 and 13. Although the present disclosure is not limited to such an example, use of a programmable microprocessor allows the processing details to be easily changed and the flexibility of the design to be increased.

In order to improve the processing speed, the structural elements included in controllers 2 and 13 may be made of logic circuits. Such structural elements may be physically made of one or more elements. When configuring these structural elements with a plurality of elements, each of the structural elements may correspond to one element. In this case, it can be considered that each of these elements correspond to one structural element.

### [Wiring of Loop Antenna 7]

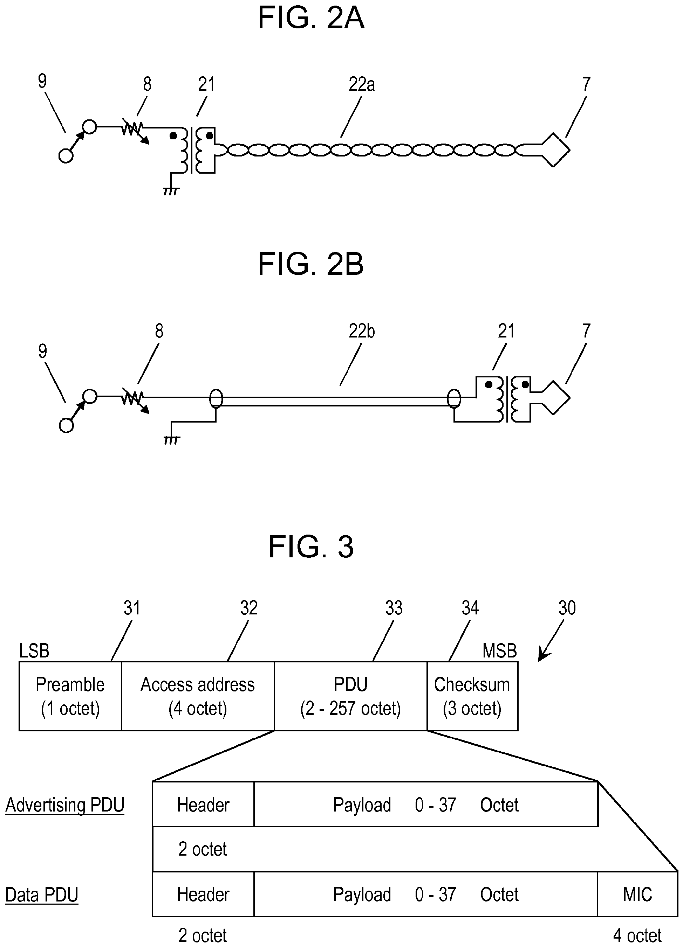

Next, wiring of loop antenna 7 according to the present embodiment will be described with reference to FIG. 2A and FIG 2B. FIG. 2A illustrates wiring in the case where loop antenna 7 is disposed near power supply unit 3 by using twisted pair wire 22a.

In the case of twisted pair wire 22a, the induced radio waves cancel each other out by the two twisted wires, if unbalance about earth is maintained. Therefore, twisted pair wire 22a is unlikely to be influenced by noise compared to two wires simply running substantially in parallel.

As illustrated in FIG. 2A, loop antenna 7 is connected to multi-contact switch 9 via balun 21 which is a balanced-to-unbalanced transformer and attenuator 8 which attenuates the level of a signal, so that loop antenna 7 can be flexibly extended to the region near power supply unit 3 in a state which is unlikely to be influenced by noise.

FIG. 2B illustrates wiring in the case where loop antenna 7 is disposed near power supply unit 3 by using coaxial wire 22b.

Coaxial wire 22b does not emit radio waves due to shielding effects. Therefore, as illustrated in FIG. 2B, loop antenna 7 is connected to one end of coaxial wire 22b via balun 21, and multi-contact switch 9 is connected to the other end of coaxial wire 22b via attenuator 8, so that loop antenna 7 can be flexibly extended to the region near power supply unit 3.

In general, twisted pair wire 22a is less expensive than coaxial wire 22b, and can be extended more easily than coaxial wire 22b.

### [Format of Communication Packet]

Next, the format of a communication packet used in the present embodiment will be described with reference to FIG. 3. FIG. 3 illustrates a frame format of a communication packet.

Examples of the communication method applicable in the present embodiment include methods which use Wi-Fi (registered trademark), Bluetooth (registered trademark, hereinafter the same), Bluetooth Low Energy (hereinafter, referred to as BLE), specified low-power radio, and ISM bands such as Wi-Sun. In the present embodiment, BLE is used which is superior to Bluetooth in terms of power-saving and less expensive than Bluetooth.

As illustrated in FIG. 3, communication packet 30 includes 1-octet preamble 31, 4-octet access address 32, 2 to 257-octet PDU 33, and 3-octet checksum 34.

Preamble 31 is used for detecting communication packet 30. In BLE, preamble 31 has a pattern in which 0 and 1 are repeatedly alternated such as 0x55(01010101b) or 0xAA(10101010b), and is used as a synchronization signal for gain adjustment of a signal and data demodulation.

Whether 0x55 or 0xAA is used in preamble 31 is determined in a way that two "1" or two "0" are not arranged next to each other in the border between preamble 31 and access address 32 when access address 32 is arranged next to preamble 31.

In other words, when the bit of access address 32 closest to the LSB of communication packet 30 is "0", 0x55 is selected as preamble 31. When the bit of access address 32 closest to the LSB of communication packet 30 is "1", 0xAA is selected as preamble 31.

Access address 32 is a 32-bit address value used by contactless power receiving device 10 as identification information when communicating with contactless power supplying device 1. PDU 33 defines advertising PDU or data PDU. Checksum 34 is a 3-byte data for detecting a packet error.

### [Operation of Contactless Power Transmission System]

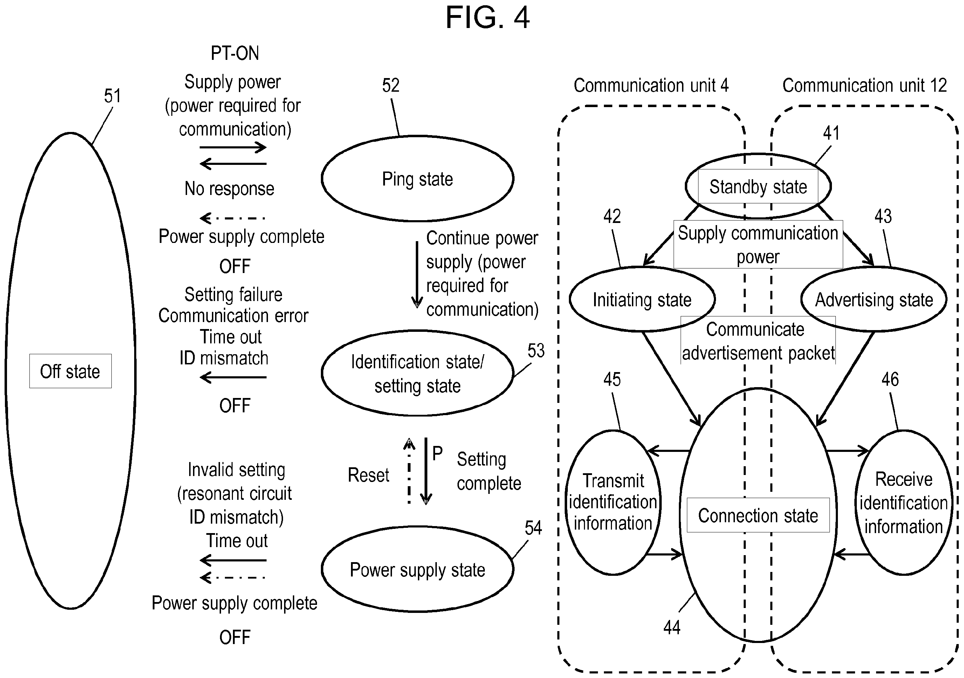

FIG. 4 is a state transition diagram of the contactless power transmission system according to the present embodiment. The left half of FIG. 4 is basically the same as FIG. 14. In FIG. 4, PT-ON, OFF, and the like which cause a state transition are added to FIG. 14.

For example, controller 2 transitions from off state 51 to ping state 52 in response to an output of a sensor (not illustrated) for detecting the placement of contactless power receiving device 10 above power supply unit 3, or in response to an instruction from input unit 6. In ping state 52, controller 2 controls power supply unit 3 such that the power required to operate controller 13 and communication unit 12 is transmitted to contactless power receiving device 10 in a contactless manner.

Controller 2 further causes communication unit 4 to transition from standby state 41 to initiating state 42. In this case, in order to enable communication via sensitive antennas 19T and 19R, controller 2 controls multi-contact switch 9 such that communication unit 4 is connected to sensitive antenna 19T.

In contrast, in contactless power receiving device 10, communication unit 12 which has received the power supplied from power circuit 16 transitions from standby state 41 to advertising state 43. Controller 13 causes communication unit 12 to perform communication of an advertisement packet in an advertisement channel.

When communication unit 4 which is in initiating state 42 receives the advertisement packet from contactless power receiving device 10 via sensitive antenna 19T, communication units 4 and 12 transition to connection state 44, and controllers 2 and 13 transition to identification state/setting state 53.

In identification state/setting state 53, contactless power supplying device 1 identifies contactless power receiving device 10, sets various parameters required for power transmission, and starts identifying power supply unit 3 which is located closest to contactless power receiving device 10.

For the identification of power supply unit 3, controller 2 first controls multi-contact switch 9 and communication unit 4 such that a message including identification information IDa specific to power supply unit 3a is transmitted via loop antenna 7a.

Next, controller 2 controls multi-contact switch 9 and communication unit 4 such that a message including identification information IDb specific to power supply unit 3b is transmitted via loop antenna 7b. Finally, controller 2 controls multi-contact switch 9 and communication unit 4 such that a message including identification information IDc specific to power supply unit 3c is transmitted via loop antenna 7c.

In FIG. 1, contactless power receiving device 10 is placed above power supply unit 3a such that resonant circuit 11 opposes power supply unit 3a. In this case, communication unit 12 receives the message including identification information IDa transmitted from loop antenna 7a via sensitive antenna 19R.

In contrast, communication unit 12 cannot receive the message including identification information IDb transmitted from loop antenna 7b and the message including identification information IDc transmitted from loop antenna 7c. This is because attenuators 8b and 8c attenuate the signals including these messages before the signals including the messages are transmitted from loop antennas 7b and 7c.

Even if communication unit 12 receives the message including identification information IDb and/or the message including identification information IDc, the levels of the received signals are very low. Hence, identification information IDa is prioritized.

After transmitting the messages including identification information IDa to IDc, controller 2 switches multi-contact switch 9 such that communication unit 4 is connected to sensitive antenna 19T. It may be that after performing transmission of the messages including identification information IDa to IDc again, controller 2 switches multi-contact switch 9 such that communication unit 4 is connected to sensitive antenna 19T.

In contactless power receiving device 10, when communication unit 12 receives the message including identification information IDa via sensitive antenna 19R, controller 13 causes communication unit 12 to transmit a message including the received identification information IDa.

In contactless power supplying device 1, when communication unit 4 receives the message including identification information IDa via sensitive antenna 19T, controller 2 determines that contactless power receiving device 10 is placed above power supply unit 3a such that resonant circuit 11 opposes power supply unit 3a.

After the determination of the position of contactless power receiving device 10, controller 2 causes power supply unit 3a to start power transmission. As a result, controller 2 transitions to power supply state 54.

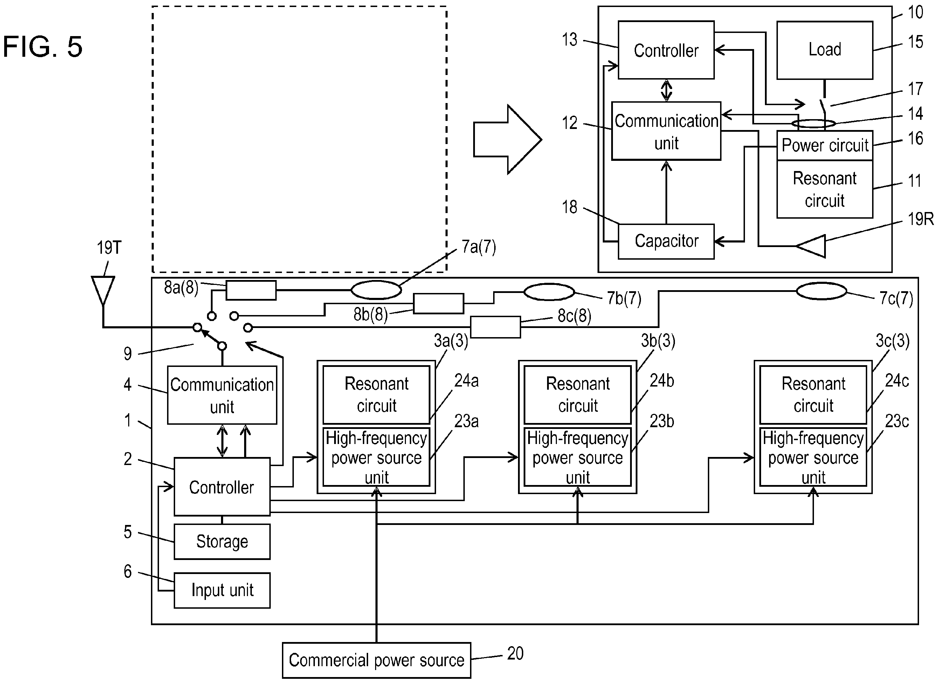

FIG. 5 is a configuration block diagram of a contactless power transmission system which illustrates a state where contactless power receiving device 10 which is in power supply state 54 has been moved from the region above power supply unit 3a to the region above power supply unit 3c.

As described above, communication unit 12 and controller 13 receive power supplied from power circuit 16 via capacitor 18. Capacitor 18 stores power required for devices, such as communication unit 12 and controller 13, which consume a small amount of power to operate for approximately one minute.

When the power supply from power circuit 16 stops, communication unit 12 and controller 13 use the power stored in capacitor 18 to perform communication necessary for maintaining connection state 44 of communication unit 4 and communication unit 12 via sensitive antennas 19T and 19R. As long as the power supply from capacitor 18 continues, connection state 44 continues.

When contactless power receiving device 10 which has been receiving power transmitted from power supply unit 3a is moved from the region above power supply unit 3a to the region above power supply unit 3c, the power from power circuit 16 decreases rapidly.

In response to the power decrease detected by power meter 14, controller 13 causes communication unit 12 to transmit, via sensitive antenna 19R, a power control message including a power error to contactless power supplying device 1. When communication unit 4 receives the power control message including the power error via sensitive antenna 19T, controller 2 attempts to increase the power to be supplied from power supply unit 3a, according to the power error.

However, it results in an ineffective power transmission because contactless power receiving device 10 is not placed above power supply unit 3a and resonant circuit 11 does not oppose power supply unit 3a. Additionally, if another contactless power receiving device is placed above power supply unit 3a, malfunction of the contactless power receiving device might be caused. If a foreign metal object is placed above power supply unit 3a, the foreign metal object may be heated unintentionally.

In the present embodiment, as described above, in contactless power receiving device 1, controller 2 controls power supply units 3a to 3c and multi-contact switch 9 so that a message including identification information IDa is first transmitted from loop antenna 7a, then identification information IDb is transmitted from loop antenna 7b, and finally identification information IDc is transmitted from loop antenna 7c.

Therefore, in the state illustrated in FIG. 5, in contactless power receiving device 10, communication unit 12 receives identification information IDc transmitted from loop antenna 7c. Controller 13 causes communication unit 12 to transmit a message including the received identification information IDc.

In contactless power supplying device 1, when communication unit 4 receives the message including identification information IDc via sensitive antenna 19T, controller 2 determines that contactless power receiving device 10 is placed above power supply unit 3c such that resonant circuit 11 opposes power supply unit 3c.

When controller 2 detects, during the power transmission by power supply unit 3a, that the identification information included in the received message has changed from identification information IDa to identification information IDc, controller 2 causes power supply unit 3a to stop power transmission. As a result, the contactless power transmission system transitions to off state 51.

When contactless power receiving device 10 which is in power supply state 54 is moved to the position where contactless power supplying device 1 does not oppose any of power supply units 3a to 3c, communication unit 4 cannot receive any messages including identification information IDa to IDc. In this case, too, controller 2 causes power supply unit 3a to stop power transmission.

As described above, according to the present embodiment, contactless power supplying device 1 transmits the identification information specific to power supply units 3a to 3c via loop antennas 7a to 7c, respectively, in a time-division manner. When contactless power receiving device 10 receives the identification information specific to any one of power supply units 3a to 3c, contactless power receiving device 10 transmits a message including the identification information via sensitive antenna 19R in order to confirm the receipt of the identification information.

When contactless power supplying device 1 receives the message via sensitive antenna 19T, contactless power supplying device 1 is capable of identifying the position of contactless power receiving device 10. As a result, it is possible to ensure safety and to improve flexibility and convenience for the user.

In the present embodiment, communication unit 12 and controller 13 receive power supplied from power circuit 16 via capacitor 18. It may be that some kind of batteries are mounted instead of capacitor 18.

When contactless power receiving device 10 which is in power supply state 54 is moved to the region other than the regions above power supply units 3a to 3c, communication unit 12 continues communication with contactless power supplying device 1 using the power stored in capacitor 18.

In this case, if communication unit 12 does not receive any of the messages including identification information IDa to IDc within a predetermined time-out period, controller 13 may cause communication unit 12 to transmit a message requesting power supply unit 3a to stop power transmission.

In the present embodiment, contactless power supplying device 1 transmits messages including identification information IDa to IDc. Additionally, communication unit 12 of contactless power receiving device 10 may transmit a message including identification information IDr specific to contactless power receiving device 10.

In contactless power supplying device 1, when communication unit 4 receives the message including identification information IDr via at least one of loop antennas 7a to 7c, controller 2 is capable of identifying the position of contactless power receiving device 10, based on the information of the loop antenna used for receiving the message and identification information IDr.

In contactless power receiving device 10, communication unit 12 may transmit the received power-supply-side identification information along with the power-receiving-side identification information. In this case, in contactless power supplying device 1, when communication unit 4 receives the signal via sensitive antenna 19T, controller 2 is capable of identifying the position of contactless power receiving device 10, based on the power-receiving-side identification information and the power-supply-side identification information.

Accordingly, when contactless power receiving device 10 is moved from the region above one loop antenna to the region above another loop antenna, controller 2 is capable of recognizing the movement.

In the present embodiment, when contactless power receiving device 10 which is in power supply state 54 is moved from the region above power supply unit 3a to the region above a power supply unit other than power supply unit 3a (power supply unit 3c in the present embodiment), power supply unit 3a stops power transmission.

When controller 2 recognizes the movement based on identification information IDr, power supply unit 3c may perform power transmission by using the power supply parameters stored in storage 5. The power supply parameters include the intensity of the power to be transmitted, the time period of power transmission, and the remaining time period of the power transmission.

In the present embodiment, communication is performed via the power-receiving-side antenna disposed near the center of the receiving coil and the power supply antenna disposed near the center of the power supply coil.

Therefore, when contactless power receiving device 10 is placed above contactless power supplying device 1 such that the center of the power receiving coil and the center of the power supply coil overlap with each other exactly, the received power is the strongest. As contactless power receiving device 10 deviates from the position, the received power becomes weaker.

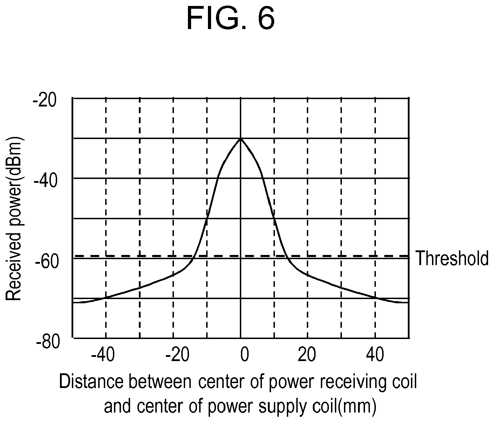

FIG. 6 illustrates a relationship between the horizontal distance from the center of the power receiving coil to the center of the power supply coil and the power received by contactless power receiving device 10. As illustrated in FIG. 6, in the present embodiment, when the received power is greater than a predetermined threshold (-60 dBm), communication unit 12 recognizes the receipt of the signal transmitted from power supply unit 3.

In other words, when the horizontal distance from the center of the power receiving coil to the center of one of the plurality of power supply coils is less than 20 mm, contactless power receiving device 10 recognizes that contactless power receiving device 10 is placed above power supply unit 3 including the power supply coil.

### [Specific Example of Contactless Power Supplying Device 1]

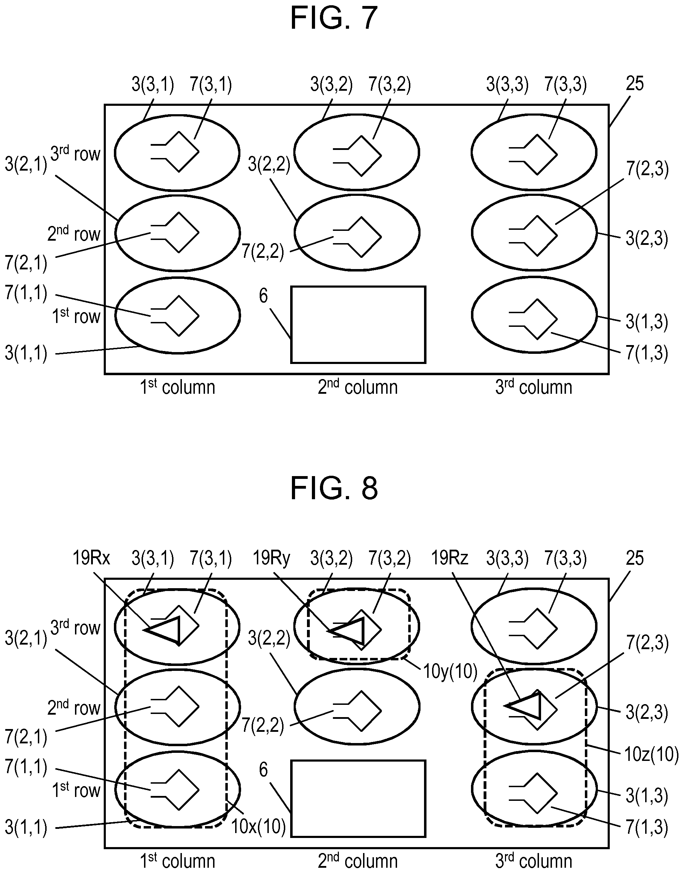

FIG. 7 is a plan view schematically illustrating induction heating cooker 25 which functions as contactless power supplying device 1.

As illustrated in FIG. 7, induction heating cooker 25 includes eight power supply units 3 (power supply units 3(1,1) to 3(3,3)) arranged in a matrix below the top surface. In FIG. 7, power supply unit 3(i, j) refers to power supply unit 3 which is in i-th row and j-th column (i and j each are a natural number equal to or less than 3). Note that power supply unit 3(1,2) is not disposed, but input unit 6 is disposed in that position instead.

Eight loop antennas 7 (loop antennas 7(1,1) to 7(3,3)) are respectively disposed near the centers of eight power supply units 3 (to be more specific, near the centers of the power supply coils included in power supply units 3). The respective signals transmitted from loop antennas 7(1,1) to 7(3,3) do not reach the outside of the surrounding regions of power supply units 3 to which loop antennas 7(1,1) to 7(3,3) are closely located.

FIG. 8 is a plan view schematically illustrating a state where a plurality of contactless power receiving devices 10 are placed on induction heating cooker 25. As illustrated in FIG. 8, three contactless power receiving devices 10 having different sizes are placed on induction heating cooker 25. Contactless power receiving device 10 is a generic term for contactless power receiving devices 10x, 10y, and 10z.

In the contactless power transmission system thus configured, contactless power supplying device 1 transmits identification information specific to power supply units 3(1,1) to 3(3,3) via loop antennas 7(1,1) to 7(3,3), respectively, in a time-division manner.

When contactless power receiving devices 10x to 10z receive the identification information specific to power supply units 3(1,1) to 3(3,3), contactless power receiving devices 10x to 10z transmit messages including the identification information to contactless power supplying device 1 in order to confirm the receipt of the identification information.

Upon receipt of the messages, contactless power supplying device 1 is capable of identifying the positions of contactless power receiving devices 10x to 10z.

Largest contactless power receiving device 10x includes one sensitive antenna 19Rx and three resonant circuits 11 (not illustrated) which are aligned. Sensitive antenna 19Rx is disposed near the center of the receiving coil of one of three resonant circuits 11.

As illustrated in FIG. 8, when contactless power receiving device 10x is placed so as to cover the entire region above power supply units 3(1,1), 3(2,1), 3(3,1), sensitive antenna 19Rx is located close to loop antenna 7(3,1), and three resonant circuits 11 are located close to power supply units 3(1,1) to 3(3,1), respectively.

In this situation, contactless power receiving device 10x communicates with induction heating cooker 25 which is contactless power supplying device 1 via loop antenna 7(3,1), and receives power transmitted from power supply units 3(1,1) to 3(3,1).

In the situation illustrated in FIG. 8, sensitive antenna 19Rx may be disposed so as to be close to loop antenna 7(1,1) or 7(2,1).

Smallest contactless power receiving device 10y includes one sensitive antenna 19Ry and one resonant circuit 11(not illustrated). Sensitive antenna 19Ry is disposed near the center of the power receiving coil of resonant circuit 11. When contactless power receiving device 10y is placed in the region above power supply unit 3(3,2), sensitive antenna 19Ry is located close to loop antenna 7(3,2), and resonant circuit 11 is located close to power supply unit 3(3,2).

In this situation, contactless power receiving device 10y communicates with induction heating cooker 25 via loop antenna 7(3,2), and receives power transmitted from power supply unit 3(3,2).

Medium-sized contactless power receiving device 10z includes one sensitive antenna 19Rz and two resonant circuits 11 (not illustrated). Sensitive antenna 19Rz is disposed near the center of the power receiving coil of one of two resonant circuits 11.

When contactless power receiving device 10z is placed in the region above power supply units 3(1,3) and 3(2,3), sensitive antenna 19Rz is located close to loop antenna 7(2,3), and two resonant circuits 11 are located close to power supply units 3(1,3) to 3(2,3), respectively.

In this situation, contactless power receiving device 10z communicates with induction heating cooker 25 via loop antenna 7(2,3), and receives power transmitted from two power supply units 3(1,3)and 3(2,3).

In the situation illustrated in FIG. 8, sensitive antenna 19Rz may be disposed so as to be close to loop antenna 7(1,3).

In the present embodiment, communication unit 4 of induction heating cooker 25 transmits identification information specific to power supply units 3(1,1) to 3(3,3). Additionally, communication units 12 of contactless power receiving devices 10x, 10y, 10z may transmit identification information IDrx, IDry, IDrz specific to contactless power receiving devices 10x, 10y, 10z, respectively.

Accordingly, in contactless power supplying device 1, when communication unit 4 receives a message including the identification information via at least one of loop antennas 7(1,1) to 7(3,3), controller 2 is capable of identifying the positions of contactless power receiving devices 10x to 10z based on the information of the loop antenna used for receiving the message and the identification information.

In contactless power receiving devices 10x to 10z, communication unit 12 may transmit the received power-supply-side identification information along with the power-receiving-side identification information. In this case, in contactless power supplying device 1, when communication unit 4 receives the signal via sensitive antenna 19T, controller 2 is capable of identifying the positions of contactless power receiving devices 10x to 10z, based on the power-receiving-side identification information and the power-supply-side identification information.

Accordingly, when at least one of contactless power receiving devices 10x to 10z is moved from the region above one loop antenna to the region above another loop antenna 7, contactless power supplying device 1 is capable of recognizing the movement.

The contactless power transmission system including no electric contact, such as metallic contact, has been described above. However, in a contact-type power transmission system having electrical contacts, it is also possible to identify the position of the power receiving device on the power supplying device in a similar manner.

### INDUSTRIAL APPLICABILITY

As described above, the present disclosure is particularly useful in a contactless power transmission system in which a contactless power supplying device is an induction heating cooker including a plurality of power supply units arranged in a matrix.

### REFERENCE MARKS IN THE DRAWINGS

- 1: contactless power supplying device
- 2, 13: controller
- 3, 3a, 3b, 3c: power supply unit
- 4, 12: communication unit
- 5: storage
- 6: input unit
- 7, 7a, 7b, 7c: loop antenna
- 8, 8a, 8b, 8c: attenuator
- 9: multi-contact switch
- 10, 10x, 10y, 10z: contactless power receiving device
- 11, 24a, 24b, 24c, 405a, 405b, 421, 422: resonant circuit
- 14: power meter
- 15, 509: load
- 16: power circuit
- 17: switch
- 18: capacitor
- 19R, 19Rx, 19Ry, 19Rz, 19T: sensitive antenna
- 20: commercial power source
- 21: balun
- 22a: twisted pair wire
- 22b: coaxial wire
- 23a, 23b, 23c: high-frequency power source unit
- 25: induction heating cooker
- 30: communication packet
- 31, 701: preamble
- 32: access address
- 33: PDU
- 34, 704: checksum
- 41: standby state
- 42: initiating state
- 43: advertising state
- 44: connection state
- 51: off state
- 52, 602: ping state
- 53, 603: identification state/setting state
- 54, 604: power supply state
- 601: selection state

## Claims

1. A power supplying device which transmits power to a power receiving device, the power supplying device comprising:
a plurality of power supply units;
a power-supply-side communication unit which communicates with the power receiving device; and
a power-supply-side controller which controls the plurality of power supply units and the power-supply-side communication unit,
wherein the power supplying device further comprises a plurality of power supply antennas disposed so as to respectively correspond to the plurality of power supply units, each of the plurality of power supply antennas covering a surrounding region of a corresponding one of the plurality of power supply units, and
the power-supply-side communication unit transmits a signal via one of the plurality of power supply antennas, and when the power-supply-side communication unit receives a signal confirming that the power receiving device has received the signal transmitted via the one of the plurality of power supply antennas, the power-supply-side controller determines that the power receiving device is placed opposing one of the plurality of power supply units which corresponds to the one of the plurality of power supply antennas.

2. The power supplying device according to claim 1, further comprising an antenna selection switch which connects the power-supply-side communication unit to at least one of the plurality of power supply antennas in a switchable manner,
wherein the power-supply-side controller controls the antenna selection switch such that the power-supply-side communication unit is sequentially connected to each of the plurality of power supply antennas in a time-division manner.

3. The power supplying device according to claim 1,
wherein the power-supply-side communication unit transmits identification information specific to each of the plurality of power supply units via a corresponding one of the plurality of power supply antennas, and receives the signal transmitted from the power receiving device, and
when the signal transmitted from the power receiving device includes the identification information specific to the one of the plurality of power supply units, the power-supply-side controller determines that the power receiving device is placed opposing the one of the plurality of power supply units.

4. The power supplying device according to claim 3,
wherein when a change in the identification information is detected during a power transmission performed by the one of the plurality of power supply units, the power-supply-side controller causes the one of the plurality of power supply units to stop the power transmission.

5. The power supplying device according to claim 1,
wherein the power-supply-side communication unit receives a signal including identification information specific to the power receiving device, and
when the power-supply-side controller determines, based on the identification information, during a power transmission performed by the one of the plurality of power supply units, that the power receiving device is placed opposing to another one of the plurality of power supply units different from the one of the plurality of power supply units, the power-supply-side controller causes the one of the plurality of power supply units to stop the power transmission, and causes the another one of the plurality of power supply units to perform a power transmission.

6. The power supplying device according to claim 5,
wherein the power-supply-side controller causes the another one of the plurality of power supply units to perform the power transmission using a parameter for the power transmission performed by the one of the plurality of power supply units.

7. The power supplying device according to claim 1,
wherein each of the plurality of power supply antennas is wired using a twisted pair wire.

8. A power receiving device which receives power transmitted from a power supplying device including: a plurality of power supply units; and a plurality of power supply antennas disposed so as to respectively correspond to the plurality of power supply units, each of the plurality of power supply antennas covering a surrounding region of a corresponding one of the plurality of power supply units, the power receiving device comprising:
a power receiving unit;
a power-receiving-side antenna; and
a power-receiving-side communication unit connected to the power-receiving-side antenna, and when the power-receiving-side communication unit receives a signal transmitted via one of the plurality of power supply antennas, the power-receiving-side communication unit transmits a signal confirming receipt of the signal transmitted via the one of the plurality of power supply antennas.

9. The power receiving device according to claim 8,
wherein the power-receiving-side communication unit transmits a signal including identification information which is specific to the one of the plurality of power supply units and which is included in the signal transmitted from the power supplying device.

10. The power receiving device according to claim 8,
wherein the power-receiving-side communication unit transmits a signal including identification information specific to the power receiving device.

11. A power transmission system comprising:
a power supplying device which transmits power to a power receiving device; and
the power receiving device which receives the power transmitted from the power supplying device,
wherein the power supplying device includes: a plurality of power supply units; a power-supply-side communication unit which communicates with the power receiving device; and a power-supply-side controller which controls the plurality of power supply units and the power-supply-side communication unit,
the power receiving device includes: a power receiving unit; a power-receiving-side antenna; and a power-receiving-side communication unit,
the power supplying device further includes: a plurality of power supply antennas disposed so as to respectively correspond to the plurality of power supply units, each of the plurality of power supply antennas covering a surrounding region of a corresponding one of the plurality of power supply units,
the power-supply-side communication unit transmits a signal via one of the plurality of power supply antennas,
the power-receiving-side communication unit is connected to the power-receiving-side antenna, and when the power-receiving-side communication unit receives the signal transmitted via the one of the plurality of power supply antennas, the power-receiving-side communication unit transmits a signal confirming receipt of the signal transmitted via the one of the plurality of power supply antennas, and
when the power-supply-side communication unit receives the signal confirming that the power receiving device has received the signal transmitted via the one of the plurality of power supply antennas, the power-supply-side controller determines that the power receiving device is placed opposing one of the plurality of power supply units which corresponds to the one of the plurality of power supply antennas.
